# EUROPEAN PATENT APPLICATION

(11) **EP 2 133 585 A1**
(43) Date of publication of application: **16.12.2009**
(21) Application number: 08739942.4
(22) Date of filing: 01.04.2008
(51) Int. Cl.: F16D 27/118, F16D 48/06

(54) **DOG CLUTCH ACTUATOR**

(30) Priority: 02.04.2007 JP 2007096036
(71) Applicant: Toyota Jidosha Kabushiki Kaisha, Toyota-shi, Aichi 471-8571 (JP)
(72) Inventor: UMENO, Takaji, Aichi-gun Aichi 480-1192 (JP); INAGUMA, Yukio, Nagoya-shi Aichi 467-0042 (JP); YAMAUCHI, Tomokazu, Toyota-shi Aichi 471-8571 (JP); SASAKI, Shoichi, Toyota-shi Aichi 471-8571 (JP)
(74) Representative: TBK-Patent
(86) International application number: PCT/JP2008/056839
(87) International publication number: WO 2008/123621

(57) **Abstract**

Provided is a dog clutch actuator comprising a sleeve (10) having dog teeth made engageable with the dog teeth formed in a power transmission shaft (30) and made movable in the axial direction, and a plunger (14) for moving together with the sleeve(10). The plunger (14) is axially moved through a yoke (16) by electric currents to flow through coils (18 and 20). The dog clutch actuator is so **characterized by** the shapes of the plunger (14) and the yoke (16) that a sucking force increases in the engaging direction, when the dog clutch is engaged, and decreases in the disengaging direction, when the dog clutch is disengaged.

## Description

### TECHNICAL FIELD

The present invention relates to a dog clutch actuator for driving a dog clutch that transmits power by engaging dog teeth with each other.

### BACKGROUND ART

Clutches are an important element in the drive power transmission system of a vehicle or the like, and have been widely used. Although various types of clutches have been known, all the clutches need to have some kind of drive mechanism to control coupling and decoupling thereof. A hydraulic drive mechanism has long been widely known as such a drive mechanism. However, the hydraulic drive mechanism has a problem that the mechanism is relatively large, inefficient, and not suitable for high speed operation.

Patent Document 1 discloses an electromagnetic clutch in which a coil is energized to control the clutch. The electromagnetic clutch is returned to a position on one side by use of a spring when the coil is not energized. Also, Patent Document 2 discloses an electromagnetic clutch in which a clutch state is maintained by residual magnetism and a coil is reversely energized to disengage the clutch. Patent Document 1: Japanese Patent Laid-Open Publication No. 2006-29579 Patent Document 2: Japanese Patent Laid-Open Publication No. 2005-168191

### DISCLOSURE OF THE INVENTION

### PROBLEMS TO BE SOLVED BY THE INVENTION

In Patent Document 1, the clutch is returned by using the spring. Thus, it is necessary to apply a holding current to hold a position by an electromagnetic actuator. Also, an electromagnetic attractive force that overcomes a spring force is required. Thus, the apparatus is increased in size.

In Patent Document 2, since the residual magnetism is used to hold a position, it is basically not necessary to apply an electric current in order to hold the position. However, it is necessary to apply an electric current when the clutch is coming out of engagement. Since it is also necessary to reverse the polarity of the coil, a switching device is required.

### MEANS FOR SOLVING THE PROBLEMS

The present invention includes: first dog teeth provided on an outer periphery of a power transmission shaft; second dog teeth that can be engaged with the first dog teeth; a moving section movable in an axial direction of the power transmission shaft, the second dog teeth being formed on an inner peripheral surface of the moving section; a yoke provided adjacent to the moving section to generate a magnetic field for axially moving the moving section by an electric current applied to a coil; and an electric current control section for controlling the electric current applied to the coil to generate an electromagnetic attractive force for engaging or disengaging the second dog teeth of the moving section with or from the first dog teeth of the power transmission shaft.

Also, preferably, the attractive force increases in an engaging direction when the second dog teeth of the moving section are engaged with the first dog teeth of the power transmission shaft, and the attractive force decreases in a disengaging direction when the second dog teeth of the moving section are disengaged from the first dog teeth of the power transmission shaft due to shapes of the moving section and the yoke.

Also, preferably, the electric current control section controls the electric current applied to the coil after engaging the second dog teeth of the moving section with the first dog teeth of the power transmission shaft to be smaller than the electric current applied at the time of engaging the second dog teeth of the moving section with the first dog teeth of the power transmission shaft.

Also, preferably, the electric current control section controls the electromagnetic attractive force at the time of disengaging the second dog teeth of the moving section from the first dog teeth of the power transmission shaft to decrease from the electromagnetic attractive force at the time of starting the disengagement.

Also, preferably, the electric current control section controls the electromagnetic attractive force at the time of engaging the second dog teeth of the moving section with the first dog teeth of the power transmission shaft to increase from the electromagnetic attractive force at the time of starting the engagement.

Also, preferably, the present invention further includes: an engaging coil energized when the second dog teeth of the moving section are engaged with the first dog teeth of the power transmission shaft; and a disengaging coil energized when the second dog teeth of the moving section are disengaged from the first dog teeth of the power transmission shaft.

Also, preferably, the yoke includes: an engaging end side tooth located on an engaging side of the moving section; a disengaging end side tooth located on a disengaging side of the moving section; and an intermediate tooth located at an intermediate portion of the two teeth, the engaging;coil being arranged between the engaging end side tooth and the intermediate tooth, the disengaging coil being arranged between the disengaging end side tooth and the intermediate tooth, and the intermediate tooth being used as a magnetic flux path for both the engaging coil and the disengaging coil.

Also, preferably, the engaging end side tooth has an inclined surface inclined radially outward toward the intermediate tooth, an inclined surface is formed opposing the inclined surface on the engaging side of the moving section, and opposing areas of the inclined surfaces gradually increase as the moving section is moved to the engaging side, thereby increasing the electromagnetic attractive force. '

Also, preferably, in the disengaging end side tooth, magnetic saturation occurs as the moving section is moved to the disengaging end side, thereby decreasing the electromagnetic attractive force.

Also, preferably, the moving section is moved between the engaging end side tooth and the disengaging end side tooth.

Also, preferably, when one of the engaging coil and the disengaging coil is energized, an electric current is applied to the other coil to cancel a magnetic flux that goes around the other coil.

Also, preferably, the engaging end side tooth has an extending portion that axially extends toward the intermediate tooth, the disengaging end side tooth has an extending portion that axially extends toward the intermediate tooth, and the intermediate tooth has extending portions that axially extend toward the engaging end side and the disengaging end side, gaps being respectively provided between the opposing extending portions of the teeth, and a magnetic detection section being provided in at least one of the gaps.

Also, preferably,' the present invention further includes a displacement detection section for detecting a displacement of the moving section from a magnetic field intensity detected by the magnetic detection section.

Also, preferably, the present invention further includes a restriction section for restricting axial movement of the moving section at positions after engaging and disengaging the second dog teeth of the moving section with and from the first dog teeth of the power transmission shaft.

### ADVANTAGES OF THE INVENTION

According to the present invention, a dog clutch can be reduced in size by engaging and disengaging the dog teeth of the moving section with and from the dog teeth of the power transmission shaft using a coil.

Also, the attractive force increases in the engaging direction at the time of engagement of the dog clutch, and the attractive force decreases in the disengaging direction at the time of disengagement due to the shapes of the moving section and the yoke. Accordingly, the moving section can be preferably moved.

Also, the electric current applied to the coil after engaging the second dog teeth with the first dog teeth is controlled to be smaller than the electric current applied at the time of engaging the second dog teeth with the first dog teeth. Accordingly, the electric current for holding the engaging state can be made small, and electric power can be reduced.

Also, the electromagnetic attractive force at the time of disengaging the second dog teeth from the first dog teeth is controlled to decrease from the electromagnetic attractive force at the time of starting the disengagement. Accordingly, the occurrence of impact and noise at the time of disengagement can be suppressed.

Also, the electromagnetic attractive force at the time of engaging the second dog teeth with the first dog teeth is controlled to increase from the electromagnetic attractive force at the time of starting the engagement. Accordingly, the second dog teeth can be reliably engaged with the first dog teeth.

### BRIEF DESCRIPTION OF THE DRAWINGS

FIG. 1 is a view for explaining the entire configuration and operation of an apparatus according to an embodiment;
FIG. 2 is a view illustrating the configuration of a main portion according to the embodiment;
FIG. 3 is a view illustrating displacement-thrust force characteristics in the configuration shown in FIG. 2;
FIG. 4 is a schematic view for explaining a dog teeth engaging state;
FIG. 5 is a view illustrating the configuration of a main portion according to another embodiment;
FIG. 6 is a view illustrating displacement-thrust force characteristics in the configuration shown in FIG. 5;
FIG. 7 is a view illustrating the configuration of a main portion according to yet another embodiment;
FIG. 8 is a view illustrating displacement-thrust force characteristics in the configuration shown in FIG. 7;
FIG. 9 is a view illustrating a state in which,a magnetic flux goes around another yoke;
FIG. 10 is a view illustrating the configuration of a main portion according to yet another embodiment;
FIG. 11 is a view for explaining the shapes of a plunger and a fork; and
FIG. 12 is a view illustrating magnetic flux density at a cutaway portion of a yoke.

### DESCRIPTION OF SYMBOLS

10: Sleeve
12: Fork
14: Plunger
14a: Convex portion
16: Yoke
16a: Engaging end side tooth
16b: Disengaging end side tooth
16c: Intermediate tooth
18: Engaging coil
20: Disengaging coil
22: Buffer
24a, 24b: Stopper
26: Support column
30: Input shaft
32: Input-side gear
34: Output shaft
36: Output-side gear
40: Fixing support column
42: Ball fixing groove
44: Locking ball
46: Spring
50: Hole
52: Bearing hole

### BEST MODE FOR CARRYING OUT THE INVENTION

In the following, embodiments of the present invention will be described based on the drawings.

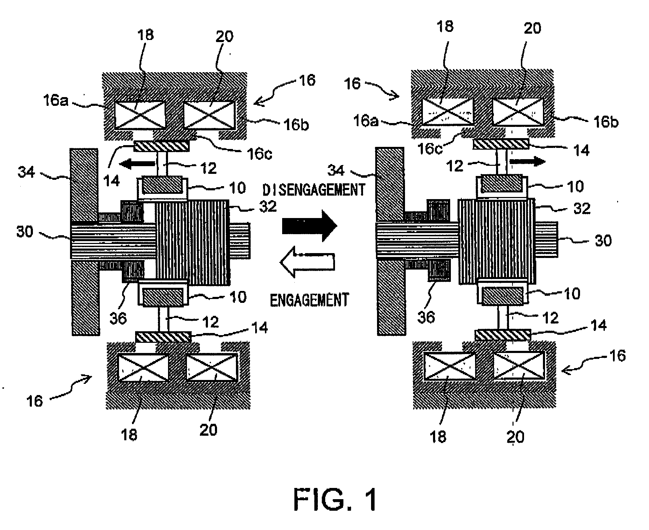

FIG. 1 is a view for explaining the entire configuration and operation of an electromagnetic clutch including an actuator according to a present embodiment.

An input-side gear 32 having dog teeth on its outer periphery is provided on an input shaft 30. On the other hand, a hollow output shaft 34 is arranged so as to surround the input shaft 30. An output-side gear 36 having dog teeth on its outer periphery is provided on the output shaft 34. The input-side gear 32 and the output-side gear 36 have the same diameters as each other, and are disposed a predetermined distance apart from each other in an axial direction.

A hollow cylindrical sleeve 10 that is movable in the axial direction is arranged on the outer sides of the input-side gear 32 and the output-side gear 36. The sleeve 10 is moved in the axial direction to be engaged with only the input-side gear 32 or with both the input-side gear 32 and the output-side gear 36.

Dog teeth (engaging teeth), having concaves and convexes whose radial-direction heights are respectively constant in the axial direction are formed at a constant pitch in a circumferential direction, are formed on the inner peripheral surface of the sleeve 10. Therefore, when the dog teeth on the inner peripheral surface of the sleeve 10 are engaged with only the input-side gear 32, no power is transmitted and the dog clutch is in a disengaging state. When the dog teeth on the inner peripheral surface of the sleeve 10 are engaged with both the input-side gear 32 and the output-side gear 36, the drive power of the input shaft 30 is transmitted to the output shaft 34.

The sleeve 10 is moved so as to be deformed by at least an engaging allowance. The distance is normally about 5 to 10 mm.

A plurality of forks 12 extending in a radial direction are fixed to the outer periphery of the sleeve 10 so as to be slidable on the sleeve 10 in a rotational direction. The distal end portions of the forks are fixed to a hollow cylindrical plunger 14. Therefore, when the plunger 14 is moved in the axial direction, the sleeve 10 rotates to be moved in the axial direction. The plunger 14, the forks 12 and the sleeve 10 constitute a moving section.

A hollow cylindrical (ring-shaped) yoke 16 is arranged on the outer side of the sleeve 10. That is, the yoke 16 includes a cylindrical portion, a ring-shaped engaging end side tooth 16a and a ring-shaped disengaging end side tooth 16b that extend inward from both end portions of the cylindrical portion, and an intermediate tooth 16c that extends inward from the intermediate portion of the cylindrical portion. The inner-side end portion of each of the engaging end side tooth 16a and the disengaging end side tooth 16b extends toward the intermediate tooth 16c. The inner-side end portions of the intermediate tooth 16c extend toward the engaging end side tooth 16a and the disengaging end side tooth 16b.

An engaging coil 18 is housed in a cylindrical space between the engaging end side tooth 16a and the intermediate tooth 16c of the yoke 16. A disengaging coil 20 is housed in a cylindrical space between the disengaging end side tooth 16b and the intermediate tooth 16c.

When the engaging coil 18 is energized, a magnetic path is formed through the engaging end side tooth 16a and the intermediate tooth 16c of the yoke 16 and the plunger 14.
The plunger 14 is thereby attracted to the engaging side. On the other hand, when the disengaging coil 20 is energized, a magnetic path is formed through the disengaging end side tooth 16b and the intermediate tooth 16c of the yoke 16 and the plunger 14. The plunger 14 is thereby attracted to the disengaging side.

A state at the time of engagement is shown on the left side of FIG. 1, where the sleeve 10 is engaged with both the input-side gear 32 and the output-side gear 36. A state at the time of disengagement is shown on the right side of FIG. 1, where the sleeve 10 is engaged with only the input-side gear 32. The plunger 14 and the sleeve 10 are moved by controlling the energization of the engaging coil 18 and the disengaging coil as described above.

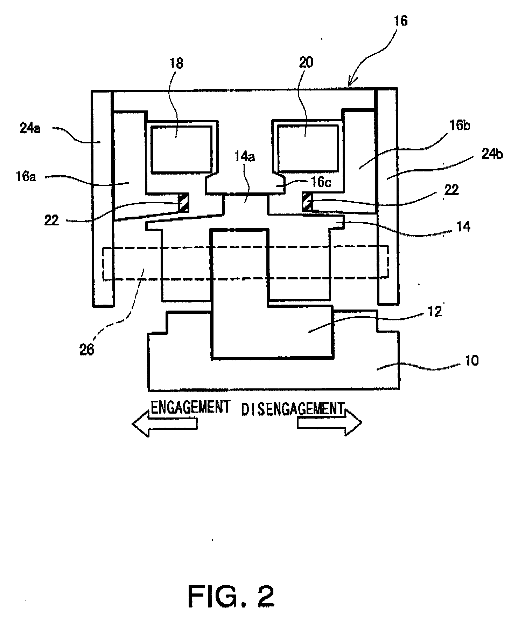

FIG. 2 shows an example of the specific shapes of the plunger 14 and the yoke 16. In the example, while the plunger 14 has a cylindrical shape as a whole, the plunger 14 has an annular convex portion 14a that projects outward from its center portion. On the other hand, in the yoke 16, the engaging end side tooth 16a and the disengaging end side tooth 16b are longer than the intermediate tooth 16c, and extend radially to the inner side. Also, the distal end portions on the inner side of the engaging end side tooth 16a and the disengaging end side tooth 16b are bent toward the intermediate tooth 16c. A gap is thereby formed between the intermediate tooth and each of the engaging end side tooth 16a and the disengaging end side tooth 16b.

The outer side surface of the convex portion 14a of the plunger 14 is located adjacent toward the inner side surface of the intermediate tooth 16c of the yoke 16. Therefore, when the plunger 14 is moved in the axial direction, the side surface of the convex portion 14a of the plunger 14 collides with the opposing end surface of the engaging end side tooth 16a or the disengaging end side tooth 16b, so that the plunger 14 stops moving.

Buffers 22 made of rubber (elastic material) are provided on the opposing end surfaces of the engaging end side tooth 16a and the disengaging end side tooth 16b. Therefore, when the plunger 14 is moved by the magnetic force generated by energizing the engaging coil 18 or the: disengaging coil 20, the shock of an impact is lessened by the buffers 22, thereby preventing the occurrence of impact noise.

A pair of stoppers 24a and 24b formed of ring-shape plates are arranged on the outer sides in the axial direction of the yoke 16. A plurality of support columns 26 parallel to the axis are provided between the stoppers 24a and 24b at the same radial positions from the center. Each of the support columns 26 penetrates a portion of the plunger 14 that extends radially inward. The penetrating portions of the support columns 26 work as a bearing for the plunger 14 moving in the axial direction. The outer-side end portions of the forks 12 in the radial direction are located within cutaway portions of the plunger 14 and thereby fixed to the plunger 14. The support columns 26 respectively penetrate portions of the plunger 14 where the forks 12 do not exist.

Moreover, the inner surface of the engaging end side tooth 16a of the yoke 16 is inclined such that the inner surface is thinner toward the intermediate portion in the axial direction and a distance from the axis center thereby increases. The outer surface of the plunger 14 corresponding to the engaging end side tooth 16a of the yoke 16 is inclined in a similar manner to the inner surface of the engaging end side tooth 16a of the yoke 16 so as to be thicker toward the intermediate portion in the axial direction. The inclination angle of the inner surface of the engaging end side tooth 16a of the yoke is substantially the same as the inclination angle of the outer surface of the plunger 14 on the engaging side, and thus the two surfaces are almost parallel to each other. Therefore, when the plunger 14 is moved to the engaging side, opposing areas of the outer surface of the plunger 14 and the inner surface of the yoke 16 increase, and a distance therebetween is reduced. Since the plunger 14 stops moving with the side surface of the convex portion 14a of the plunger 14 colliding with the buffer 22 as described above, the plunger 14 and the stoppers 24a and 24b are set not to collide with each other.

On the other hand, the inner surface of the disengaging end side tooth 16b of the yoke 16 is slightly inclined, and the outer surface of the plunger 14 corresponding to the disengaging end side tooth 16b of the yoke 16 is slightly inclined in the axis center direction toward the disengaging end side. Thus, even when the plunger 14 is moved to the engaging side, the end portion on the intermediate tooth 16c side of the disengaging end side tooth 16b of the yoke 16 remains closest to the plunger 14.

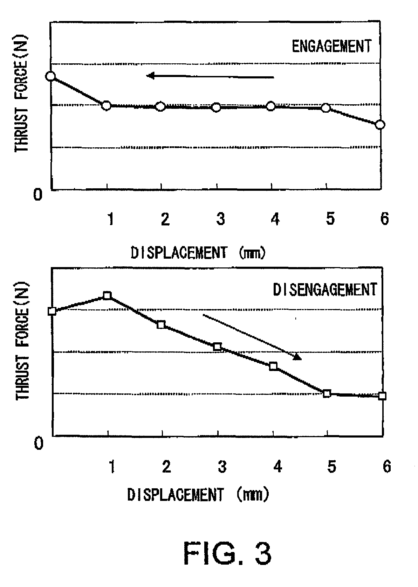

FIG. 3 shows a thrust force obtained when the engaging coil 18 or the disengaging coil 20 is energized with a constant allowable electric current in the configuration described above. As shown in the upper drawing in FIG. 3, when the engaging coil 18 is energized, the thrust force is largest on the engaging side, and is smallest on the disengaging side. Since the thrust force is largest on the engaging side, the sleeve 10 can be reliably pushed into engagement. Also, as shown in the lower drawing in FIG. 3, when the disengaging coil 20 is energized, the thrust force is large at the end portion on the engaging side, and becomes larger thereafter. The thrust force then decreases with an almost constant gradient, and becomes smallest at the end portion on the disengaging side. Since the sleeve 10 has already been separated from the output-side gear 36 at the end portion on the disengaging side, the thrust force may be small.

In FIG. 3, a displacement of 0 mm represents the end portion on the engaging side and a displacement of 6 mm represents the end portion on the disengaging side. The example shows data obtained in a case where a coil area is 35 mm², a space factor is 67%, and a coil current with a current density of 20 A to produce 470 AT (max) is applied.

The reason why the thrust force changes depending on the position of the plunger 14 when the engaging coil 18 is energized as described above is as follows. When the sleeve 10 is moved to the engaging side, the adjacent areas of the inclined surfaces of the plunger 14 and the yoke 16 increase. ' A magnetic flux passes therethrough, so that magnetic resistance decreases and an attractive force increases. On the other hand, when the disengaging coil 20 is energized and the sleeve 10 is moved to the disengaging side, the path of the magnetic flux does not change a lot, and magnetic saturation occurs within the yoke 16, so that the magnetic resistance increases and the attractive force decreases.

As described above, according to the present embodiment, as the sleeve 10 is moved to the engaging side, the thrust force becomes stronger, and as the sleeve 10 is moved to the disengaging side, the thrust force becomes smaller.

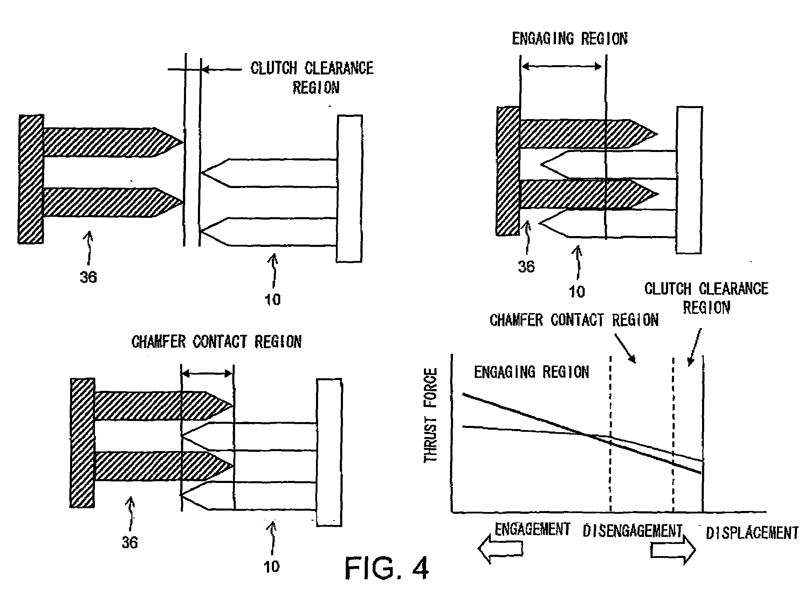

FIG. 4 schematically shows the engagement between the dog teeth at the time of clutch engagement. When the sleeve 10 is moved from the disengaging state, the dog teeth of the sleeve 10 and the output-side gear 36 which are apart from each other at first are engaged with each other (a spline is inserted into a chamfer). If the thrust force at this time is large, the shock at the time of contact is great, and noise is also generated. A large thrust force is not required at the time of inserting the spline into the chamfer at first. Thus, the thrust force is preferably controlled to be the same as or slightly larger than that at the time of starting the movement from the disengaged state.

When the sleeve 10 is further moved, the dog teeth are tightly engaged with each other, and the contact area therebetween increases. Thus, the thrust force needs to overcome the frictional force, and it is necessary to gradually increase the thrust force.

According to the present embodiment, the thrust force gradually increases as the sleeve 10 is moved at the time of engagement, and the thrust force gradually decreases as the sleeve 10 is moved at the time of disengagement, as described above. Accordingly, the engagement and disengagement can be appropriately performed in the dog clutch.

Furthermore, the electric current applied to the engaging coil 18 after engaging the dog teeth of the sleeve 10 with the output-side gear 36 is controlled to be smaller than the electric current applied at the time of engaging the dog teeth of the sleeve 10 with the output-side gear 36. The electric current for holding the engaging state can thereby be made smaller, so that the electric power can be reduced. To be more specific, the electric current applied to the engaging coil 18 after engaging the dog teeth of the sleeve 10 with the output-side gear 36 is preferably made 0.

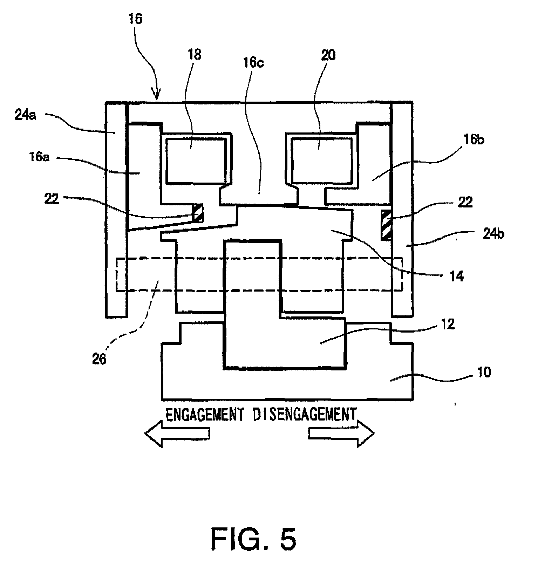

FIG. 5 shows the configuration according to another embodiment. The embodiment is different from that of FIG. 2 in the configuration of the disengaging side portion of the plunger 14 and the disengaging end side tooth 16b of the yoke 16. To be more specific, the plunger 14 has substantially the same thickness from the center portion toward the disengaging side (the thickness becomes slightly smaller toward the disengaging side) as if the convex portion 14a directly extended to the end portion on the disengaging side of the plunger 14.

On the other hand, the disengaging end side tooth 16b of the yoke 16 has substantially the same length as the intermediate tooth 16c. The height on the inner surface side is the same as the intermediate tooth 16c. Therefore, even when the plunger 14 is moved, the plunger 14 does not collide with the disengaging end side tooth 16b of the yoke 16, but is moved along the inner side surface of the disengaging end side tooth 16b.

Also, a portion of the plunger 14 opposing the inner side surface of the disengaging end side tooth of the yoke 16 is gradually lowered in the inner direction (the thickness of the plunger 14 is smaller). Therefore, at the time of disengagement, the magnetic saturation occurs and the thrust force becomes gradually smaller in a similar manner to the case in FIG. 2.

In FIG. 5, the stoppers 24a and 24b are provided on both end surfaces in the axial direction of the yoke 16. Also, the buffer 22 made of rubber, for example, is provided on the surfaces of the stoppers 24a and 24b on the route through which the plunger 14 is moved to the disengaging side in the configuration shown in FIG. 5. Therefore, when the plunger 14 is moved to the engaging side, the side end surface of the convex portion 14a collides with the buffer 22 provided on the end surface on the intermediate tooth 16c side of the engaging end side tooth 16a of the yoke 16, and when the plunger 14 is moved to the disengaging side, the plunger 14 collides with the buffer 22 provided on the stopper 24b, thereby restricting the movement of the plunger 14.

In the configuration, the disengaging end side tooth 16b of the yoke 16 is located outside of the outer surface of the plunger 14. Therefore, the plunger 14 can be assembled from the disengaging-side end portion of the yoke 16 after the yoke 16 is completed, thereby facilitating the operation of assembling the plunger 14.

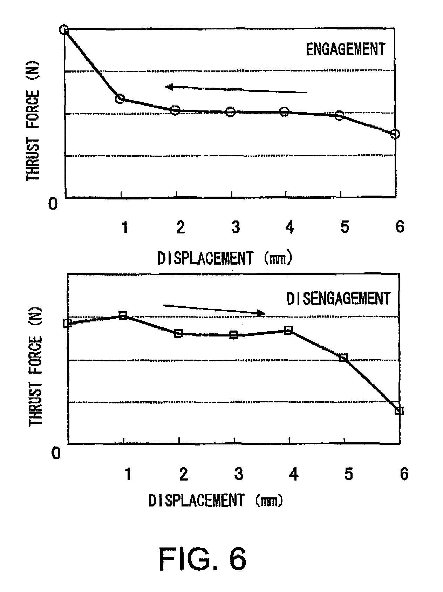

The magnetic fluxes formed by the engaging coil 18 and the disengaging coil 20 in the configuration are the same as those in the case of FIG. 2. FIG. 6 shows the relationship between the displacement and the thrust force at the time of engagement and disengagement obtained in the apparatus shown in FIG. 5. As shown in the drawing, the thrust force similar to that in the aforementioned case can also be obtained in the apparatus shown in FIG. 5, and the engagement and disengagement of the dog clutch can be controlled by the preferable movement of the plunger 14.

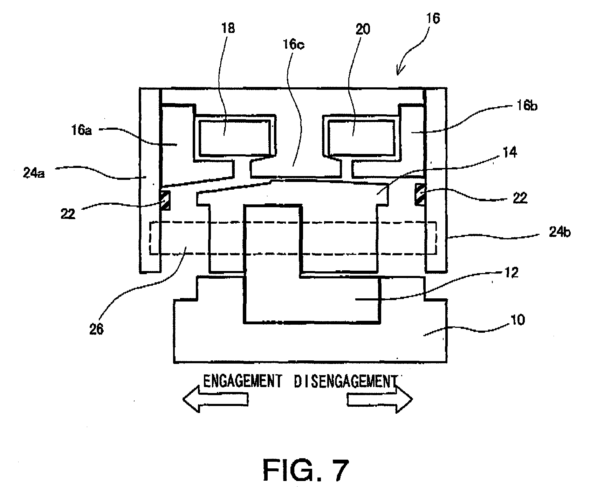

FIG. 7 shows yet another embodiment. In the embodiment, the convex portion 14a is not provided in the plunger 14, and the plunger 14 has a substantially flat shape on the outer side surface. The plunger 14 is located inside of the engaging end side tooth 16a of the yoke 16 even when the plunger 14 is moved to the engaging side. The buffer 22 is provided at a position where the engaging-side end portion of the plunger 14 collides with the stopper 24a on the engaging side.

With this configuration, the plunger 14 is moved inside the yoke 16. The outer side surface of the plunger 14 on the engaging side and the inner side surface of the engaging end side tooth 16a of the yoke 16 are inclined in a similar manner to the aforementioned case. As the plunger 14 is moved to the engaging side, the plunger 14 and the yoke 16 approach each other, and the magnetic flux easily passes through the gap therebetween. On the other hand, the outer surface of the plunger 14 on the disengaging side is an inclined surface that is lowered inward (a tapered shape), and the inner side surface of the disengaging end side tooth 16b of the yoke 16 is a cylindrical surface that is substantially parallel to the axis. Therefore, when the plunger 14 is moved to the engaging side, the thrust force gradually increases, and when the plunger 14 is moved to the disengaging side, the thrust force gradually decreases due to the magnetic saturation.

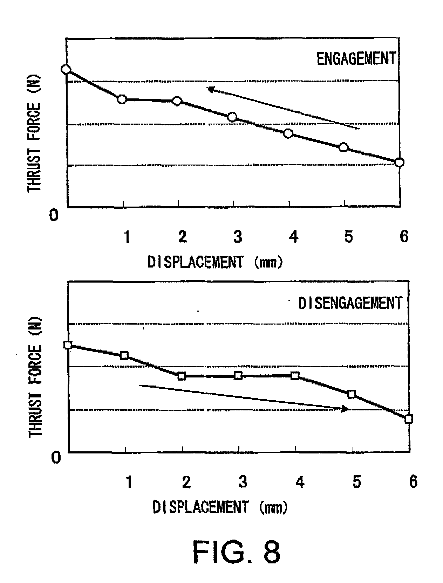

FIG. 8 shows the relationship between the displacement and the thrust force. As shown in the drawing, at the time of engagement, the thrust force increases as the plunger 14 is moved to the engaging side. At the time of disengagement, the thrust force decreases as the plunger 14 is moved to the disengaging side.

With the configuration shown in FIG. 7, the engaging end side tooth and the disengaging end side tooth 16b of the yoke 16 can be reduced in length in the radial direction, so that the entire length in the radial direction can be reduced. Moreover, since it is not necessary to provide the convex portion 14a in the plunger 14, the length in the axial direction can be also reduced.

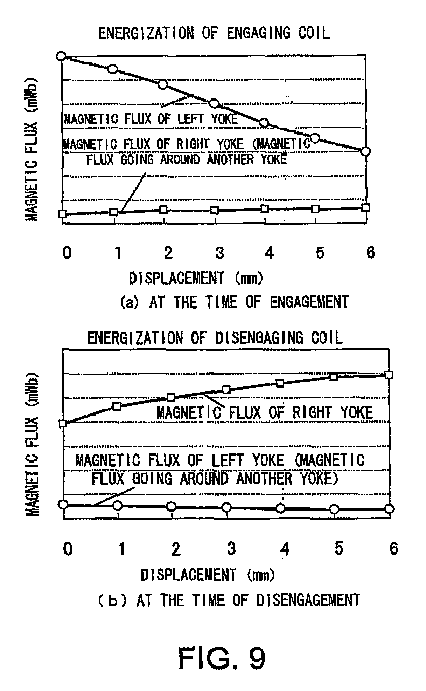

FIG. 9 shows the magnetic fluxes on the engaging side (a left yoke) and the disengaging side (a right yoke) of the yoke 16 at the time of engagement when the engaging coil 18 is energized and at the time of disengagement when the disengaging coil 20 is energized. As shown in the drawing, when the engaging coil 18 is energized, there is a magnetic flux going around the disengaging side yoke including the disengaging end side tooth 16b. When the disengaging coil 20 is energized, there is a magnetic flux going around the engaging side yoke including the engaging end side tooth 16a. Meanwhile, it is found that the magnitude of the magnetic flux going around the other side shows little change even when the plunger 14 is moved.

Thus, when the plunger 14 is driven by energizing one of the coils, an electric current is applied to the other coil to cancel the magnetic flux going around the other coil, so that the magnetic flux going around the other coil can be canceled out. By canceling the magnetic flux-going,around the other coil as described above, interference between the magnetic fluxes is prevented, and the plunger 14 can be more preferably driven.

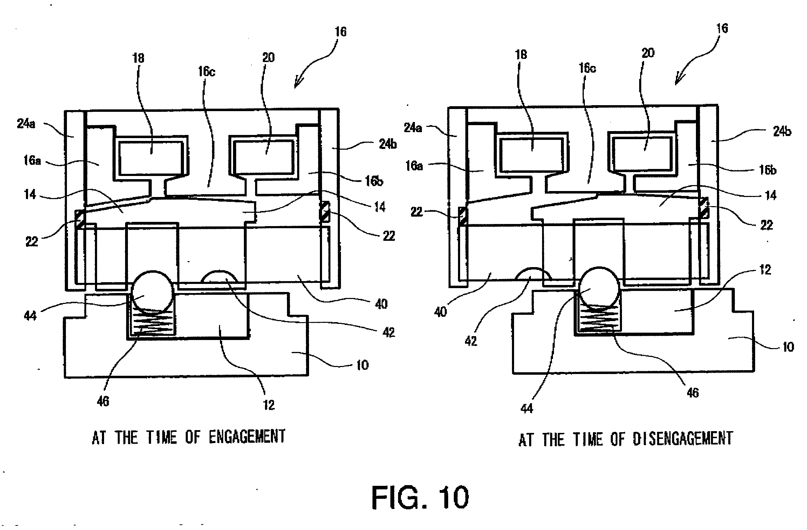

FIG. 10 shows yet another embodiment. In the embodiment, the movement of the plunger 14 and the sleeve 10 is locked at two positions of an engaging position and a disengaging position. That is, a fixing support column 40 is provided between the stoppers 24a and 24b. Two hemispherical ball fixing grooves 42 are provided in the inner side surface of the fixing support column 40. The ball fixing groove 42 on the engaging side is for fixing the position on the engaging side, and the ball fixing groove 42 on the disengaging side is for fixing the position on the disengaging side. A locking ball 44 is fixed in a portion of the sleeve 10 or the fork 12 with the locking ball 44 being pushed outward by a spring 46. The movement of the plunger 14 is thereby restricted with the locking ball 44 being located within the ball fixing groove 42. Accordingly, the plunger 14 and the sleeve 10 can be positioned at either the engaging position or the disengaging position in a state where the energization of the engaging coil 18 or the disengaging coil 20 is stopped. The depths of the ball fixing grooves 42 on the engaging side and the disengaging side may be equal to or different from each other.

In this configuration, it is necessary to release the locking ball in order to move the plunger 14 and the sleeve 10 for engagement or disengagement. Thus, the thrust force needs to be large enough to release the locking ball at the time of starting the movement.

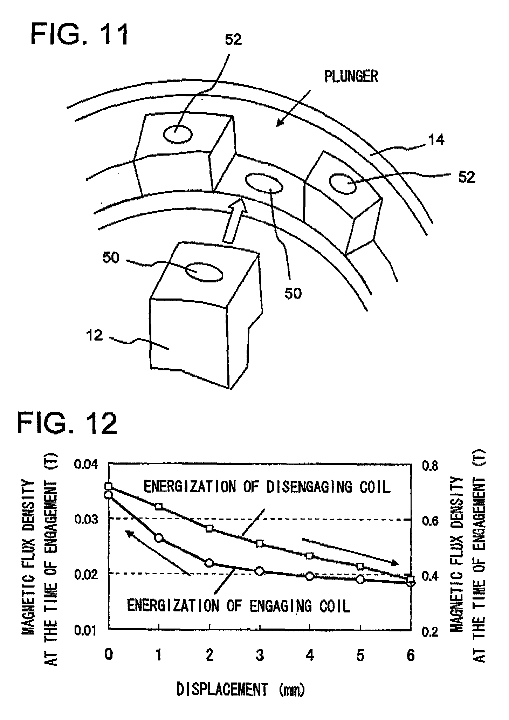

FIG. 11 schematically shows the configuration for providing the fixing support column 40. The inner side portion of the plunger 14 is partially cutaway at every constant interval in the circumferential direction, and a portion of the fork 12 is inserted thereinto to fix the fork 12 to the plunger 14. A hole 50 is axially formed in the corresponding portion of each of the fork 12 and the plunger 14. The fixing support column 40 is inserted into the holes 50. A bearing hole 52 for supporting the shaft that supports the plunger 14 between the stoppers 24a and 24b while allowing the axial movement of the plunger 14 is provided in a portion of the plunger 14 where the fork 12 is not inserted.

FIG. 12 shows the magnetic flux density at the gap (a cutaway portion) between the opposing end surfaces of the intermediate tooth 16c and the disengaging end side tooth 16b of the yoke 16 in the configuration shown in FIG. 7. In the drawing, a circle represents the magnetic flux density at the time of engagement when the engaging coil 18 is energized, and a square represents the magnetic flux density at the time of disengagement when the disengaging coil 20 is energized. At the time of disengagement, the magnetic flux density is substantially linearly converted from a displacement of 0 mm to 6 mm as the plunger 14 is displaced. At the time of engagement, the magnetic flux density is substantially linearly converted from a displacement of 6 mm to 1 mm as the plunger 14 is displaced.

Accordingly, the position of the plunger 14 can be detected by detecting the magnetic field intensity at the position. It is therefore preferable to detect the position of the plunger 14 by arranging a relatively small magnetic sensor such as a hall device in the gap. Whether the plunger 14 is moved to a desired position can be thereby confirmed. When the plunger 14 has not been moved to a desired position, movement control can be performed again. The magnetic flux density at the gap (a cutaway portion) between the opposing end surfaces of the intermediate tooth 16c and the engaging end side tooth 16a of the yoke 16 becomes larger when the engaging coil is energized and shows a similar change. Thus, a similar effect can be obtained by detecting the magnetic flux density at the gap.
Provided is a dog clutch actuator comprising a sleeve (10) having dog teeth made engageable with the dog teeth formed in a power transmission shaft (30) and made movable in the axial direction, and a plunger (14) for moving together with the sleeve(10). The plunger (14) is axially moved through a yoke (16) by electric currents to flow through coils (18 and 20). The dog clutch actuator is so characterized by the shapes of the plunger (14) and the yoke (16) that a sucking force increases in the engaging direction, when the dog clutch is engaged, and decreases in the disengaging direction, when the dog clutch is disengaged.

## Claims

1. A dog clutch actuator comprising:
first dog teeth provided on an outer periphery of a power transmission shaft;
second dog teeth that can be engaged with the first dog teeth;
a moving section movable in an axial direction of the power transmission shaft, the second dog teeth being formed on an inner peripheral surface of the moving section;
a yoke provided adjacent to the moving section to generate a magnetic field for axially moving the moving section by an electric current applied to a coil; and
an electric current control section for controlling the electric current applied to the coil to generate an electromagnetic attractive force for engaging or disengaging the second dog teeth of the moving section with or from the first dog teeth of the power transmission shaft.

2. The dog clutch actuator according to claim 1, wherein the attractive force increases in an engaging direction when the second dog teeth of the moving section are engaged with the first dog teeth of the power transmission shaft, and the attractive force decreases in a disengaging direction when the second dog teeth of the moving section are disengaged from the first dog teeth of the power transmission shaft due to shapes of the moving section and the yoke.

3. The dog clutch actuator according to claim 1 or 2, wherein the electric current control section controls the electric current applied to the coil after engaging the second dog teeth of the moving section with the first dog teeth of the power transmission shaft to be smaller than the electric current applied at the time of engaging the second dog teeth of the moving section with the first dog teeth of the power transmission shaft.

4. The dog clutch actuator according to any one of claims 1 to 3, wherein the electric current control section controls the electromagnetic attractive force at the time of disengaging the second dog teeth of the moving section from the first dog teeth of the power transmission shaft to decrease from the electromagnetic attractive force at the time of starting the disengagement.

5. The dog clutch actuator according to any one of claims 1 to 4, wherein the electric current control section controls the electromagnetic attractive force at the time of engaging the second dog teeth of the moving section with the first dog teeth of the power transmission shaft to increase from the electromagnetic attractive force at the time of starting the engagement.

6. The dog clutch actuator according to any one of claims 1 to 5, further comprising:
an engaging coil energized when the second dog teeth of the moving section are engaged with the first dog teeth of the power transmission shaft; and
a disengaging coil energized when the second dog teeth of the moving section are disengaged from the first dog teeth of the power transmission shaft.

7. The dog clutch actuator according to claim 6, wherein the yoke comprises:
an engaging end side tooth located on an engaging side of the moving section;
a disengaging end side tooth located on a disengaging side of the moving section; and
an intermediate tooth located at an intermediate portion of the both teeth,
the engaging coil being arranged between the engaging end side tooth and the intermediate tooth,
the disengaging coil being arranged between the disengaging end side tooth and the intermediate tooth, and
the intermediate tooth being used as a magnetic flux path for both the engaging coil and the disengaging coil.

8. The dog clutch actuator according to claim 7, wherein the engaging end side tooth has an inclined surface inclined radially outward toward the intermediate tooth,
an inclined surface is formed opposing the inclined surface on the engaging side of the moving section, and
opposing areas of the inclined surfaces gradually increase as the moving section is moved to the engaging side, thereby increasing the electromagnetic attractive force.

9. The dog clutch actuator according to claim 7 or 8, wherein in the disengaging end side tooth, magnetic saturation occurs as the moving section is moved to the disengaging end side, thereby decreasing the electromagnetic attractive force.

10. The dog clutch actuator according to any one of claims 7 to 9, wherein the moving section is moved between the engaging end side tooth and the disengaging end side tooth.

11. The dog clutch actuator according to any one of claims 7 to 10, wherein when one of the engaging coil and the disengaging coil is energized, an electric current is applied to the other coil to cancel a magnetic flux that goes around the other coil.

12. The dog clutch actuator according to any one of claims 1 to 11, wherein the engaging end side tooth has an extending portion that extends axially toward the intermediate tooth,
the disengaging end side tooth has an extending portion that extends axially toward the intermediate tooth, and
the intermediate tooth has extending portions,that extend axially toward the engaging end side and the disengaging end side,
gaps being respectively provided between the opposing extending portions of the teeth, and a magnetic detection section being provided in at least one of the gaps.

13. The dog clutch actuator according to any one of claims 1 to 11, further comprising a displacement detection section for detecting a displacement of the moving section from a magnetic field intensity detected by the magnetic detection section.

14. The dog clutch actuator according to any one of claims 1 to 13, further comprising a restriction section for restricting axial movement of the moving section at positions after engaging and disengaging the second dog teeth of the moving section with and from the first dog teeth of the power transmission shaft.
